# EUROPEAN PATENT APPLICATION

(11) **EP 4 722 304 A1**
(43) Date of publication of application: **08.04.2026**
(21) Application number: 24811134.6
(22) Date of filing: 22.05.2024
(51) Int. Cl.: C09D 11/16, B43K 8/02

(54) **AQUEOUS INK COMPOSITION FOR WRITING IMPLEMENT AND WRITING IMPLEMENT USING SAME**

(30) Priority: 25.05.2023 JP 2023086326
(71) Applicant: MITSUBISHI PENCIL COMPANY, LIMITED, Tokyo 140-8537 (JP)
(72) Inventor: ICHINOSE, Akane, Tokyo 140-8537 (JP); NAKATA, Yusuke, Tokyo 140-8537 (JP)
(74) Representative: Vossius & Partner Patentanwälte Rechtsanwälte mbB
(86) International application number: PCT/JP2024/018784
(87) International publication number: WO 2024/242128

(57) **Abstract**

Provided is an aqueous ink composition for a writing implement that is easily wetted on a non-absorbing surface, enables stable writing without repelling of a drawn line, prevents blurring of the drawn line even when a cap is removed, is excellent in non-drying property, has no difference in vertical density of a coloring material in a pen core, and is excellent in drawn line drying property, and a writing implement using the same favorable as a marking pen or a marker pen. The aqueous ink composition for a writing implement according to the present disclosure includes at least a coloring material, 0.01 to 10 mass% of a neutralized product of an isobutylene-maleic anhydride copolymer, 0.001 to 5 mass% of one or more surfactants selected from an anionic surfactant and a nonionic surfactant, and water.

## Description

### Technical Field

The present specification relates to an aqueous ink composition for a writing implement used for marker pens, marking pens, and the like, and a writing implement using the composition.

### Background Art

Aqueous ink compositions used for marker pens, and marking pens have been required to improve in writing performance on a non-absorbing surface, non-drying property, drawn line drying property, and the like.

As a known aqueous ink composition for a writing implement or the like in consideration of writing on a non-absorbing surface, non-drying property, drawn linedrawn line drying property, and the like, for example,
[1] an ink composition for a writing implement containing: an organic solvent having a solubility parameter (SP value) of 5 to 15 and a vapor pressure of 0.01 mmHg to 45 mmHg at 20°C; a colorant composed of a pigment; and a resin having a solubility in water and ethanol at 25°C of 7% or less, to provide an ink composition for a writing implement that is suitable for a marking pen, a marker pen, a ballpoint pen, or the like, capable of writing on various types of writing surfaces such as a resin surface, a glass surface, and a metal surface, and excellent in drawn line fixability to a non-absorbing surface, water resistance, and alcohol resistance (see, for example, Patent Document 1),
[2] a concealing ink composition containing at least water, wax particles in a solid state at room temperature as a concealing agent, and a dispersant, wherein the solid wax has an average particle size of 1.0 to 10 µm, and an ink viscosity of 1.0 to 10 mPa·s as measured with a rotational viscometer at 25°C and at 50 rpm, to provide a concealing ink composition that is highly concealed, has an excellent non-drying property of a pen tip, can write well without blur, and has an excellent cap off property (see, for example, Patent Document 2),
[3] an aqueous ink composition for a glass surface and a ceramic surface containing an acrylic silicone-based resin emulsion, a pigment, a dispersant, and an aqueous solvent, to provide an ink in which even when writing is performed on a surface of glass or ceramic, the handwriting has sufficiently excellent properties of water resistance, hot water resistance, and scratch resistance, and the handwriting remains sufficiently even when the glass product or the ceramic is repeatedly washed (see, for example, Patent Document 3),
[4] an erasable ink composition for a writing plate containing water, titanium oxide, an erasability imparting agent, polyamide, and a fatty acid amide, to provide an erasable ink composition for a writing plate capable of achieving both prevention of a decrease in concealability due to separation of titanium oxide in a pen core over time and easy erasability capable of erasing a writing line with a light abrasion force (see, for example, Patent Document 4),
[5] a hydrophobic colorant aqueous solution containing a hydrophobic colorant such as an oil-soluble dye, a disperse dye, or a solvent-soluble pigment, a salt composed of a hydrophobic resin containing an acidic group such as a carboxylic acid or a phenol group and an alkali substance, and water, which is an ink composition in which the hydrophobic resin in which the hydrophobic colorant is dissolved is converted into a water-soluble salt with the alkali substance, and the water-soluble salt is dissolved or dispersed in water, in which an isobutylene-maleic anhydride polymer is used as the hydrophobic resin in Examples 13 or the like, to provide a colorant aqueous solution from which a printed matter having high fastness such as water resistance and abrasion resistance on a recording medium can be obtained, and further to provide an aqueous ink having high clogging resistance when used in an inkjet recording system, (see, for example, Patent Document 5), and
[6] an aqueous ink composition for a writing implement containing at least a colored tablet containing an isobutylene-based polymer and the like as a colorant and a dispersant to provide a colored tablet excellent in solubility and redispersibility, an aqueous ink composition for a writing implement using the colored tablet, and the like, in which an isobutylene maleic anhydride copolymer is used as the isobutylene-based polymer in Example 3 or the like (see, for example, Patent Document 6), and the like are disclosed.

The aqueous ink compositions and the like for writing implements and the like described in Patent Documents 1 to 4 are individually preferable in that the wettability to a non-absorbing surface is improved, the drawn line drying property is improved, and the separation of titanium oxide in the pen core over time is prevented. However, it is still insufficient to achieve both the non-drying property of the pen tip and the difference in vertical density of the coloring material in the pen core, and further improvement has been desired.

The aqueous ink compositions and the like described in Patent Documents 5 and 6 show a proximity technique in that an example using an isobutylene-maleic anhydride polymer is disclosed, but the aqueous ink composition of Patent Document 5 is used for an inkjet recording method, and the aqueous ink composition of Patent Document 6 is also an example using an isobutylene-maleic anhydride polymer as a dispersant. The purpose of use and the technical idea (configuration and operation effect based on the configuration) are different from those of the present disclosure.

### Citation List

### Patent Document

Patent Document 1: JP H11-21491 A (Claims, Examples, etc.)
Patent Document 2: JP 2013-32454 A (Claims, Examples, etc.)
Patent Document 3: JP 2014-105282 A (Claims, Examples, etc.)
Patent Document 4: JP 2021-54898 A (Claims, Examples, etc.)
Patent Document 5: JP H9-143410 (Claims, Examples, etc.)
Patent Document 6: JP 2023-31243 A (Claims, Examples, etc.)

### Summary of Invention

### Technical Problem

The present disclosure has been made in view of the problems of the known techniques described above, and aims to solve the problems. The object is to provide an aqueous ink composition for a writing implement, which is ready to get wet on a non-absorbing surface, enables stable writing without letting the drawn line repelled, and does not cause the drawn line to be blurred even when a cap is removed. has excellent non-drying properties, has no difference in the densities of the coloring material between a upper part and a lower part in the pen core, and has excellent drawn line drying properties, and a writing implement using the same.

### Solution to Problem

The inventors of the present invention have extensively conducted studies in view of the above-described known problems, and resultantly found that when at least a coloring material, a predetermined amount of a neutralized product of a specific isobutylene copolymer, a predetermined amount of one or more surfactants selected from an anionic surfactant and a nonionic surfactant, and water are contained, an aqueous ink composition for a writing implement intended to achieve the above object and a writing implement using the same are obtained, leading to completion of the present disclosure.

That is, an aqueous ink composition for a writing implement according to the present disclosure contains at least a coloring material, 0.01 to 10 mass% of a neutralized product of an isobutylene-maleic anhydride copolymer, 0.001 to 5 mass% of one or more surfactants selected from an anionic surfactant and a nonionic surfactant, and water.

The surfactants preferably have an HLB value of 4 to 12.

The surfactants are preferably selected from Group A described below. Group A: acetylene glycols, phosphoric acid esters, and silicone surfactants
A writing implement according to the present disclosure contains the aqueous ink composition for a writing implement having the composition described above.

### Advantageous Effects of Invention

According to the present disclosure, there are provided an aqueous ink composition for a writing implement that is easily wetted on a non-absorbing surface, enables stable writing without repelling of a drawn line, prevents blurring of the drawn line even when a cap is removed, is excellent in non-drying property, has no vertical difference in density of a coloring material in a pen core, and is excellent in drawn line drying property, and a writing implement using the same.

The object and effects of the present disclosure can be recognized and obtained especially using the components and combinations indicated in the claims. Both general explanation described above and detailed explanation described below are exemplary and explanatory and do not limit the present disclosure described in claims.

### Description of Embodiments

Hereinafter, embodiments of the present disclosure will be described in detail. The technical scope of the present disclosure is not limited to the embodiments described below but includes the invention described in the claims and equivalents thereof. The present disclosure can be implemented based on the contents disclosed in the present specification and technical common knowledge (including design matters and obvious matters) in the art.

### <Aqueous Ink Composition for Writing Implement>

An aqueous ink composition for a writing implement according to the present disclosure includes at least a coloring material, 0.01 to 10 mass% of a neutralized product of an isobutylene-maleic anhydride copolymer, 0.001 to 5 mass% of one or more surfactants selected from an anionic surfactant and a nonionic surfactant, and water.

### <Coloring Material>

Examples of the coloring material to be used in the present disclosure includes all dyes dissolved or dispersed in water, known inorganic or organic pigment systems such as titanium oxide, resin particle pigments containing a pigment or a dye, pseudo pigments produced by coloring a resin emulsion with a dye, colorless pseudo pigments in which resin emulsion is not dyed, white resin particles, pigments including silica or mica as a base material with multi-layer coating of iron oxide, titanium oxide, or the like as surface layers, bright pigments such as aluminum pigments, thermochromic pigments (particles), photochromic pigments (particles), and composite pigments (particles) thereof, which can be used without limitation. These coloring materials (particles) may be dense or hollow.

Examples of aluminum pigments that can be used include commercially available products such as WXM series in which an aluminum surface has been rust-proofed with a phosphorous-based compound, WL series in which an aluminum surface is rust-proofed with a molybdenum compound, EMR series in which an aluminum flake surface is coated with dense silica (all available from Toyo Aluminium K.K.), and SW-120 PM (available from Asahi Kasei Chemicals Corporation) . One of these pigments may be used alone or two or more in combination as a mixture.

When titanium oxide is added, for example, it is desirable to use alumina or silica, or those treated with zirconia or zinc, and it is preferable to use rutile-type or anatase-type titanium oxide.

Examples of the dye include: acid dyes such as Eosin, Phloxine, Water Yellow #6-C, Acid Red, Water Blue #105, Brilliant Blue FCF, and Nigrosine NB; direct dyes such as Direct Black 154, Direct Sky Blue 5B, and Violet BB; and basic dyes such as rhodamine and methyl violet.

Examples of the inorganic pigment include azo lake, insoluble azo pigments, chelate azo pigments, phthalocyanine pigments, perylene and perinone pigments, and nitroso pigments. More specific examples of the inorganic pigment include inorganic pigments such as carbon black, titanium black, zinc white, red iron oxide, aluminum, chrome oxide, iron black, cobalt blue, yellow iron oxide, viridian, zinc sulfide, lithopone, cadmium yellow, vermilion, cadmium red, chrome yellow, molybdate orange, zinc chromate, strontium chromate, white carbon, clay, talc, ultramarine, precipitated barium sulfate, baryta powder, calcium carbonate, lead white, navy white, iron blue, manganese violet, aluminum powder, and brass powder, C.I. Pigment Blue 15, C.I. Pigment Blue 17, C.I. Pigment Blue 27, C.I. Pigment Red 5, C.I. Pigment Red 22, C.I. Pigment Red 38, C.I. Pigment Red 48, C.I. Pigment Red 49, C.I. Pigment Red 53, C.I. Pigment Red 57, C.I. Pigment Red 81, C.I. Pigment Red 104, C.I. Pigment Red 146, C.I. Pigment Red 245, C.I. Pigment Yellow 1, C.I. Pigment Yellow 3, C.I. Pigment Yellow 12, C.I. Pigment Yellow 13, C.I. Pigment Yellow 14, C.I. Pigment Yellow 17, C.I. Pigment Yellow 34, C.I. Pigment Yellow 55, C.I. Pigment Yellow 74, C.I. Pigment Yellow 95, C.I. Pigment Yellow 166, C.I. Pigment Yellow 167, C.I. Pigment Orange 5, C.I. Pigment Orange 13, C.I. Pigment Orange 16, C.I. Pigment Violet 1, C.I. Pigment Violet 3, C.I. Pigment Violet 19, C.I. Pigment Violet 23, C.I. Pigment Violet 50, and C.I. Pigment Green 7.

Examples of the thermochromic pigment (particles) include a thermochromic pigment produced by microencapsulating a thermochromic composition containing at least a leuco dye functioning as a color former, a color developer serving as a component having an ability to develop a color of the leuco dye, and a discoloration temperature adjusting agent capable of controlling a discoloration temperature in coloring of the leuco dye and the color developer such that the thermochromic composition has a predetermined average particle size (for example, 0.1 to 10 µm).

Examples of the photochromic pigment (particles) include photochromic particles composed of at least one or more selected from photochromic dyes (compound), fluorescent dyes, and the like and a resin such as a terpene phenol resin, and photochromic pigments (particles) produced by microencapsulating a photochromic composition containing at least one or more selected from photochromic dyes (compound), fluorescent dyes, and the like, an organic solvent, and an additive such as an antioxidant, a light stabilizer, or a sensitizer to have a predetermined average particle size (for example, 0.1 to 10 µm).

In the present disclosure (including Examples and the like), the "average particle size" is a value measured by the laser diffraction or dynamic light scattering method. In the laser diffraction method, it is a value of D50 calculated on a volumetric basis. For example, a particle size distribution analyzer HRA9320 X100 available from NIKKISO CO., LTD. can be used for this measurement. The average particle size using the dynamic light scattering method is a value of the average particle size of the cumulant method analysis in the scattering intensity distribution, which is calculated using, for example, a concentrated particle analyzer FPAR-1000 (available from Otsuka Electronics Co., Ltd.).

These coloring materials can be used alone or in a combination of two or more types (hereinafter referred to simply as "at least one").

In these coloring materials, it is desirable to use a pigment, that is, the above-described inorganic pigment, organic pigment, a coloring resin pigment such as a pseudo pigment produced by coloring, with a dye, a resin particle pigment or a resin emulsion containing a pigment, a white plastic pigment, a hollow resin pigment (particles), a pigment including silica or mica as a base material with multi-layer coating of iron oxide, titanium oxide, or the like as surface layers, a bright pigment such as an aluminum pigment, a thermochromic pigment (particles), a photochromic pigment (particles), and a composite pigment (particles) thereof, in terms of lower gloss on a coating film and uniformity of the coating film.

Desirably, the (total) content of these coloring materials is preferably 0.5 to 50 mass%, more preferably 2 to 40 mass%, and particularly preferably 5 to 30 mass%, with respect to the total amount of the aqueous ink composition for a writing implement (hereinafter, simply referred to as "total amount of the ink composition").

When the content of the coloring material is 0.5 mass% or more, low gloss and uniformity of the coating film are exhibited, and formation of a more beautiful coating film can be achieved. On the other hand, when the content is 50 mass% or less, an increase in viscosity is suppressed, and the fluidity of the ink is improved, which is preferable.

The neutralized product of the isobutylene-maleic anhydride copolymer used in the present disclosure is a neutralized product of a copolymer of isobutylene and maleic anhydride, and in the present disclosure, the neutralized product becomes a component that synergistically exhibits the effect of the present disclosure by using one or more surfactants selected from an anionic surfactant and a nonionic surfactant described later in combination.

In the neutralized product of the isobutylene-maleic anhydride copolymer to be used, the basic structure of the isobutylene-maleic anhydride copolymer is represented by Formula (I), and Formula (II) is an ammonia-neutralized product (modified product) of the isobutylene-maleic anhydride copolymer that can be preferably used in the present disclosure.

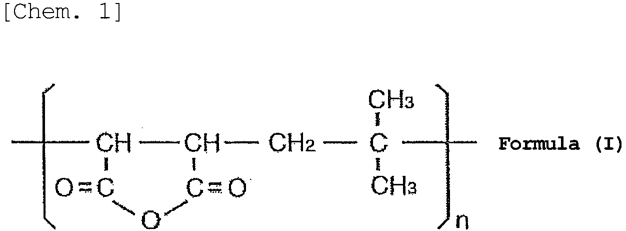

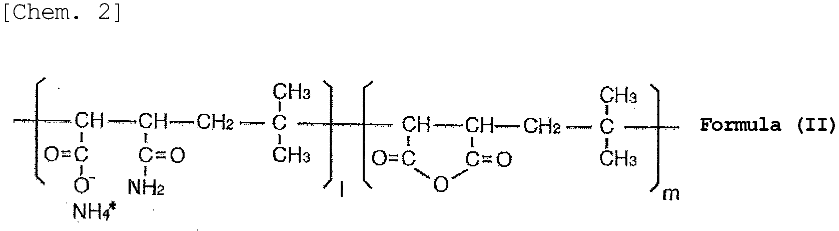

In the present disclosure, in addition to the ammonia neutralized product of Formula (II), a sodium hydroxide neutralized product or an amine neutralized product may be used. Numerical values such as n in Formula (I), l and m in Formula (II), and j and k in Formula (III) vary depending on the weight-average molecular weight to be described below and the like, and their preferable ranges are determined.

Further, in the present disclosure, a neutralized product produced by neutralizing an imidized isobutylene-maleic anhydride copolymer represented by Formula (III) produced by imidizing (imide-modifying) an isobutylene-maleic anhydride copolymer with ammonia, sodium hydroxide, amine, or the like may be used.

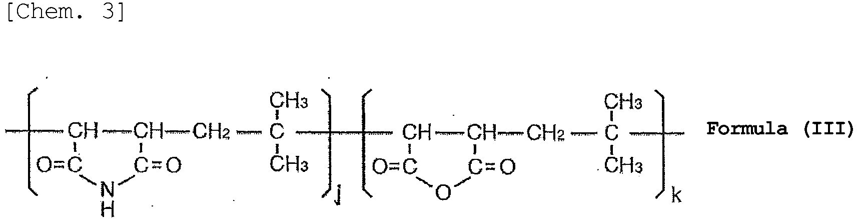

The weight-average molecular weight of each neutralized product produced by neutralizing the isobutylene-maleic anhydride copolymer represented by Formula (II) or (III) is preferably 3000 to 400000, more preferably 5000 to 200000, particularly preferably 30000 to 100000, and most preferably 50000 to 70000. The weight-average molecular weight is a value in terms of polystyrene measured by aqueous gel permeation chromatography (GPC) analysis.

As the isobutylene-maleic anhydride copolymer and the neutralized product thereof, commercially available products, such as "ISOBAM" available from Kuraray Co., Ltd. can be exemplified. For example, neutralized products of ISOBAM-04, ISOBAM-06, ISOBAM-10, and ISOBAM-18, ISOBAM-104, and ISOBAM-110 are commercially available products of an ammonia neutralized product (modified product) of the isobutylene-maleic anhydride copolymer in Formula (II). Moreover, neutralized products of ISOBAM-304, ISOBAM-306, and ISOBAM-310 are exemplified. When the neutralized product of the isobutylene-maleic anhydride copolymer [from Formula (I) and the like] to be used is prepared, for example, neutralized products can be produced by letting the neutralization degree be 1 when all carboxyl groups of the isobutylene-maleic anhydride copolymer are neutralized, and then calculating and preparing the necessary amounts of ammonia, sodium hydroxide, amine, and the like to be used for neutralization.

The content of the neutralized product of these isobutylene-maleic anhydride copolymer is preferably 0.01 to 10 mass%, more preferably 0.05 to 4 mass%, and particularly preferably 0.1 to 2 mass%, with respect to the total amount of the ink composition.

When the content of the neutralized product of the isobutylene-maleic anhydride copolymer is less than 0.01 mass%, loose aggregate cannot be formed in the ink of the pen tip, and therefore the effect of the present disclosure cannot be achieved. On the other hand, when the content is more than 10 mass%, the viscosity increases so that the ink ejection property decreases, and the writing property is adversely affected, resulting in increased cost.

To exhibit the effect of the present disclosure, it is necessary to use one or more surfactants selected from an anionic surfactant and a nonionic surfactant as surfactants together with a neutralized product of the isobutylene-maleic anhydride copolymer.

The anionic surfactant and the nonionic surfactant to be used preferably have an HLB value of 4 to 18, and particularly preferably have an HLB value of 4 to 12.

When the surfactant has an HLB value in the range of 4 to 12, good wetting to a non-absorbing surface is obtained, and favorable drawing quality is obtained. When the HLB value of the surfactant to be used is more than 18, the hydrophilic group moiety of the surfactant is long, the steric hindrance is large, and thus it becomes difficult to array the surfactant on the interface, and the wettability to a non-absorbing surface is lowered. On the other hand, when the HLB value is less than 4, the solubility to the ink is lowered, and thus it becomes difficult to obtain desired wettability.

The "HLB value" in the present disclosure can be obtained from the Kawakami method [HLB value = 7 + 11.7 log (MW/MO), MW: molecular weight of hydrophilic moiety, MO: molecular weight of lipophilic moiety].

As the anionic surfactant and the nonionic surfactant that can be used, those selected from Group A shown below are desirable from the viewpoint of suppressing ink separation in the pen core and the viewpoint of the non-drying property of the pen tip.

Group A: acetylene glycols, phosphoric acid esters, and silicone surfactants
Specific examples of the acetylene glycols that can be used include at least one selected from Formulae (I) to (III) shown below.

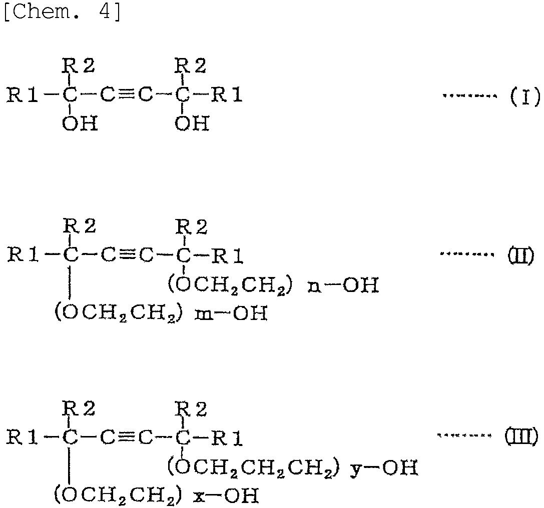

[In Formulae (I) to (III), R1 and R2 are each a linear or branched alkyl group having 1 to 8 carbon atoms, and m, n, x, and y are 1 to 100.] Examples of the linear or branched alkyl group having 1 to 8 carbon atoms represented by R1 and R2 in Formulae (I) to (III) include a methyl group, an ethyl group, a propyl group, an isopropyl group, an n-butyl group, an isobutyl group, a t-butyl group, a pentyl group, a hexyl group, a heptyl group, and an octyl group.

Examples of the acetylene glycols of Formula (I) include 2,5,8,11-tetramethyl-6-dodecine-5,8-diol, 5,8-dimethyl-6-dodecine-5,8-diol, 2,4,7,9-tetramethyl-5-dodecine-4,7-diol, 8-hexadecine-7,10-diol, 7-tetradecine-6,9-diol, 2,3,6,7-tetramethyl-4-octine-3,6-diol, 3,6-diethyl-4-octine-3,6-diol, and 2,5-dimethyl-3-hexine-2,5-diol. Examples of the alkylene oxide (EO, PO) adduct of the acetylene glycol of Formula (II) and Formula (III) include alkylene oxide derivatives of the acetylene glycol.

The method for synthesizing each compound listed in Formulae (I) to (III) is known, and each compound can be obtained by various methods, or a commercially available product may be used. Examples of the acetylene glycols include commercially available SURFYNOL 104 series such as SURFYNOL 104 [2,4,7,9-tetramethyl-5-dodecine-4,7-diol, available from Nissin Chemical Co., Ltd.], SURFYNOL 104E (ethylene glycol) obtained by diluting SURFYNOL 104 with various solvents, SURFYNOL 104H (ethylene glycol), SURFYNOL 104A (2-ethylhexanol), and SURFYNOL 104S containing silica particles, and EO adducts of SURFYNOL 104 such as SURFYNOL 420, 440, 465, 485, DF110D, DF37, DF58, DF75, and DF220.

Examples of the phosphoric acid ester that can be used include an alkyl phosphoric acid ester which is an ester of an aliphatic alcohol and phosphoric acid, an alkyl ether phosphoric acid ester which is an ester of an alkylene oxide adduct of an aliphatic alcohol and phosphoric acid, an alkyl phenyl ether phosphoric acid ester which is an ester of an alkylene oxide adduct of an aromatic alcohol and phosphoric acid, and derivatives thereof. These phosphoric acid esters may be used alone or in combination of two or more thereof. Preferably, a phosphoric acid mono-ester of a polyoxyethylene alkyl ether or a polyoxyethylene alkyl aryl ether, a phosphoric acid di-ester of a polyoxyethylene alkyl ether or a polyoxyethylene alkyl aryl ether, a phosphoric acid tri-ester, or a derivative thereof is used.

Specific examples of the phosphoric acid ester that can be used include PHOSPHANOL series available from TOHO Chemical Industry Co., Ltd., and PLYSURF series available from DKS Co., Ltd.

Examples of the PHOSPHANOL series include PHOSPHANOL RA-600 (P.O.E alkyl ether phosphoric acid ester, HLB value: 11.7), PHOSPHANOL RB-410 (P.O.E oleyl ether phosphoric acid ester, HLB value: 8.6), and PHOSPHANOL RS-710 (P.O.E alkyl ether phosphoric acid ester, HLB value: 13.3) (all available from TOHO Chemical Industry Co., Ltd.).

Examples of the PLYSURF series include PLYSURF AL (polyoxyethylene styrenated phenyl ether phosphoric acid ester, HLB value: 5.6), PLYSURF A208B [polyoxyethylene (2) lauryl ether phosphoric acid ester, HLB value: 6.6], PLYSURF A208F [polyoxyethylene (3) alkyl (C8) ether phosphoric acid ester, HLB value: 8.7], PLYSURF A212C [polyoxyethylene (6) tridecyl ether phosphoric acid ester, HLB value: 9.4], PLYSURF A215C [polyoxyethylene (10) tridecyl ether phosphoric acid ester, HLB value: 11.5], and PLYSURF 212E [polyoxyalkylene alkylphenyl ether phosphoric acid ester, HLB value: 10] (all available from DKS Co., Ltd.).

These can be used as they are or as a salt neutralized with an alkali metal or an organic base. Two or more thereof may be used in combination.

Examples of the silicone surfactant (silicone-based compound) include side chain-modified polydimethylsiloxane, both terminal-modified polydimethylsiloxane, one terminal-modified polydimethylsiloxane, and side chain-both terminal-modified polydimethylsiloxane. One of these may be used alone, or two or more thereof may be used in combination. Among there, as the silicone surfactant, a polyether-modified silicone surfactant having a polyoxyethylene group or a polyoxyethylene polyoxypropylene group as a modification group is particularly preferable because it exhibits good properties as an aqueous surfactant.

Such a silicone surfactant may be appropriately synthesized, or a commercially available product may be used. Commercially available products of the silicone surfactant are available from BYK Japan KK, Shin-Etsu Chemical Co., Ltd., Dow Corning Toray Silicone Co., Ltd., NIHON EMULSION Co., Ltd., KYOEISHA CHEMICAL Co., LTD., and the like.

The polyether-modified silicone surfactant is not particularly limited, and can be appropriately selected according to the purpose. Examples thereof include those obtained by introducing a polyalkylene oxide structure represented by General Formula (S-1) shown below into a Si-moiety side chain of dimethylpolysiloxane.

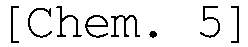

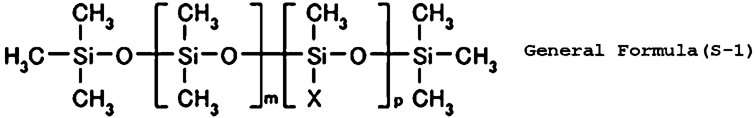

**X = -R(C₂H₄O)ₐ (C₃H₆O)_{b} R'**

(In Formula (S-1), m, p, a, and b each independently represent an integer, R represents an alkylene group, and R' represents an alkyl group.)

As the polyether-modified silicone surfactant, a commercially available product can be used. Examples thereof include KF-644, KF-642, KF-643 (available from Shin-Etsu Chemical Co., Ltd.), EMALEX-SS-5602, SS-1906EX (available from Nippon Emulsion Co., Ltd.), DOWSIL FZ-2105, FZ-2118, FZ-2154, FZ-2161, FZ-2162, FZ-2163, FZ-2164 (available from Dow Corning Toray Silicone Co., Ltd.), BYK-33, BYK-387 (available from BYK Japan KK), TSF4440, TSF4452, and TSF4453 (available from Toshiba Silicones Ltd.).

Among these, as the silicone surfactant, a surfactant represented by Formula (1) shown below is particularly preferable from the viewpoint of wettability to a non-absorbing surface and improvement in defoaming property of the ink.

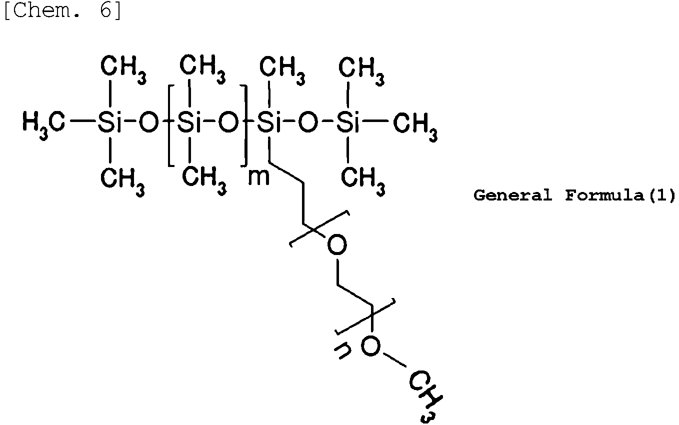

(In Formula (1), m represents an integer of 0 to 7, and n represents an integer of 2 to 15.)

The (total) content of these surfactants is preferably 0.001 to 5 mass%, more preferably 0.001 to 1 mass%, and particularly preferably 0.001 to 0.5 mass% with respect to the total amount of the ink composition. When the content of the surfactant is less than 0.001 mass%, the non-drying property of the pen tip becomes insufficient, and on the other hand, when the content exceeds 5 mass%, the ink separation suppression in the pen core and the non-drying property of the pen tip become insufficient.

In the present disclosure, hollow particles are preferably contained together with a neutralized product of an isobutylene-maleic anhydride copolymer and one or more surfactants selected from an anionic surfactant and a nonionic surfactant, from the viewpoint of further improving the non-drying property.

By further using the hollow particles, a loose aggregate is generated in the ink of the pen tip, and thus the ink is further hardly affected by removing the cap, and the non-drying property can be further improved. As the hollow particles that can be used, at least one of hollow particles having an average particle size of 0.1 to 2.0 µm, for example, in the case of commercial products, ROPAQUE OP-62 (average particle size: 450 nm, hollowness: 33%), ROPAQUE OP-91, ROPAQUE HP-1055 (average particle size: 1000 nm, hollowness: 55%), ROPAQUE HP-91 (average particle size: 1000 nm, hollowness: 50%), ROPAQUE ULTRA (average particle size: 380 nm, hollowness: 45%), ROPAQUE ULTRA E (average particle size: 380 nm, hollowness: 45%), ROPAQUE ULTRA DUAL (average particle size: 380 nm, hollowness: 45%) (available from DOW), SX-863 (A), SX-864 (B), SX-866 (A), SX-866 (B) (average particle size: 300 nm, hollowness: 30%), SX-868 (average particle size: 500 nm) (available from JSR Corporation), Nipol MH5055 (average particle size: 500 nm), Nipol MH8101 (average particle size: 1 µm) (available from Zeon Corporation), and the like can be used.

The hollow particles to be used have hollow portions in organic particles such as resin particles and inorganic particles such as silica, and the material and shape thereof are not particularly limited as long as the effects of the present disclosure are not impaired. The hollow particles may be single hollow particles having one hollow portion per hollow particle or multi-hollow particles having a plurality of hollow portions per hollow particle.

Example of the hollow particles to be used include inorganic hollow particles such as glass and silica particles, hollow resin particles of styrene-based resins such as crosslinked styrene-acrylic resins, acrylic resins such as acrylonitrile-acrylic resins, methacrylic resins, phenol-based resins, fluorine-based resins, polyamide-based resins, polyimide-based resins, polycarbonate-based resins, and polyether-based resins which are made of a polymer compound. Examples of the shape thereof include a spherical shape, an elliptical shape, and a needle shape. As the material thereof, hollow resin particles are preferably used, and as the shape thereof, a spherical shape is preferably used. Particles having no hollow portion, so-called solid particles (dense solid particles) cannot exhibit further effects of the present disclosure.

Examples of the hollow particles that can be specifically used include commercially available Nipol MH5055 available from Zeon Corporation, Sunsphere, UltraE, OP-62, SN-1055 available from DOW, and SX866 (A) available from JSR Corporation. Examples of the inorganic silica hollow particles include SiliNax (registered trademark) available from Nittetsu Mining Co., Ltd. The hollow particles to be used can be used alone (one kind) or in combination of two or more thereof.

The content of these hollow particles is preferably 0.1 to 10%, more preferably 0.1 to 5% in terms of solid content density with respect to the total amount of the aqueous ink composition.

When the content of the hollow particles is less than 0.1%, the further effect of the present disclosure cannot be exhibited, and on the other hand, when the content is more than 10%, the non-drying property of the pen tip deteriorates.

The aqueous ink composition for a writing implement of the present disclosure can appropriately contain, in addition to at least the above-described coloring material, neutralized product of an isobutylene-maleic anhydride copolymer, and one or more surfactants selected from an anionic surfactant and a nonionic surfactant, water (tap water, purified water, distilled water, ion-exchanged water, pure water, and the like) as a solvent as a balance, and a water-soluble resin, a resin emulsion, a pH adjusting agent, an antiseptic agent or a bacteriostatic agent, a thickener, and the like as long as the effect of the present disclosure is not impaired.

The water-soluble resin and the resin emulsion that can be used function as a fixing agent, a dispersant, and a stabilizing agent. For examples, at least one selected from water-soluble resins having a hydrophobic portion in the molecule such as polyacrylic acid, acrylic resins, water-soluble styrene-acrylic resins, water-soluble styrene-maleic acid resins, polyvinyl alcohol, polyvinyl pyrrolidone, water-soluble maleic acid resins, water-soluble styrene resins, water-soluble ester-acrylic resins, ethylene-maleic acid copolymers, polyethylene oxide, and water-soluble urethane resins, and resin emulsions such as acrylic emulsions, vinyl acetate-based emulsions, a vinyl chloride-based emulsion, polyolefin-based emulsions, urethane-based emulsions, styrene-butadiene emulsions, styrene-acrylonitrile emulsions, silicone resin emulsions, and silicone-acrylic copolymer emulsions can be used.

Preferably, from the viewpoints of dispersibility of the coloring material, viscosity adjustment, and improvement in a fixing ability, the water-soluble resin or the resin emulsion having an acid value of 240 or less is preferably used, and, particularly preferably, a water-soluble resin such as an acrylic resin, a water-soluble styrene-acrylic resin, a styrene-maleic acid resin, or a urethane resin, or the resin emulsion such as an acrylic resin emulsion, further having a glass transition temperature (Tg) of 140°C or less, is desirably used. When the acid value of the resin is 240 or less, the dispersion stability and the scratch resistance can be further improved.

In the present disclosure, the "acid value" represents the number of mg of KOH required to neutralize 1 g of a resin, and is, for example, a value measured in accordance with JIS K3054. The "glass transition temperature" is Tg measured in accordance with JIS K7121, and can be measured using, for example, Rigaku thermo plus evo DSC8230 (available from Rigaku Corporation).

As the water-soluble resin and the resin emulsion, commercially available products can be used. For example, as the water-soluble resin, Joncryl 60J (water-soluble styrene-acrylic resin, acid value: 215, glass transition temperature: 85°C) and Joncryl PDX- 7787 (acrylic emulsion, acid value: 100, glass transition temperature: 25°C) available from BASF, or VINYBLAN 700 (vinyl chloride-based emulsion) available from Nissin Chemical Industry Co., Ltd., acid value: 57, and glass transition temperature: 70°C can be used.

The content (total: solid content) of the water-soluble resin and the resin emulsion is preferably 0.1 to 15 mass%, more preferably 0.1 to 10 mass%, and particularly preferably 0.1 to 5 mass% with respect to the total amount of the ink composition from the viewpoint of improving the drawing quality and further improving the ink dischargeability.

Examples of the pH adjuster include ammonia, urea, monoethanolamine, diethanolamine, triethanolamine, alkali metal salts of carbonic acid and phosphoric acid such as sodium tripolyphosphate and sodium carbonate, and hydrates of alkali metals such as sodium hydroxide. Examples of the antiseptic agent or the antibacterial agent include phenol, sodium omadine, sodium benzoate, and benzimidazole-based compounds.

As the thickener, for example, cellulose derivatives can be used, and examples thereof include hydroxyalkyl cellulose, carboxymethylcellulose (CMC) or salts thereof, fermented cellulose, crystalline cellulose, and polysaccharides. Examples of the polysaccharides that can be used include xanthan gum, guar gum, hydroxypropylated guar gum, casein, gum arabic, gelatin, amylose, agarose, agaropectin, arabinan, curdlan, callose, carboxymethyl starch, chitin, chitosan, quince seed, glucomannan, gellan gum, tamarind seed gum, dextran, nigeran, hyaluronic acid, pustulan, funoran, HM pectin, porphyran, laminaran, lichenan, carrageenan, alginic acid, tragacanth gum, alkasy gum, succinoglycan, locust bean gum, and tara gum. One of these may be used alone, or two or more may be used in combination. Commercially available products of these, when present, can be used.

An intended aqueous ink composition for a writing implement as the aqueous ink composition for a writing implement of the present disclosure can be obtained by appropriately combining at least a coloring material, 0.01 to 10 mass% of a neutralized product of an isobutylene-maleic anhydride copolymer, 0.001 to 5 mass% of one or more surfactants selected from an anionic surfactant and a nonionic surfactant, water, and other components according to the application of the ink for a writing implement (marking pen, marker pen, etc.), and stirring and mixing the obtained material with a stirrer such as a homomixer, a homogenizer, or a disper, and further, removing coarse particles in the ink composition through filtration or centrifugation as necessary.

In addition, the pH of the aqueous ink composition for a writing implement of the present disclosure (at 25°C) is adjusted to preferably 5 to 10, further preferably 6 to 9.5, by using a pH adjuster or the like from the perspective of usability, safety, stability of the ink itself, and matching with the ink container.

The aqueous ink composition for a writing implement of the present disclosure configured as described above contains at least a coloring material, 0.01 to 10 mass% of a neutralized product of an isobutylene-maleic anhydride copolymer, 0.001 to 5 mass% of one or more surfactants selected from an anionic surfactant and a nonionic surfactant, and water, and contains the predetermined content of each of the isobutylene-maleic anhydride copolymer neutralized product, and one or more of the anionic surfactant and the nonionic surfactant, thereby exerting the following functions and effects 1) to 4).
1) Non-drying property, drawn line drying property, and separation in the pen core when the cap is removed are prevented. In this function, when only a surfactant is contained, the density of the surfactant increases, and the blending system collapses. However, by containing a neutralized product of the isobutylene-maleic anhydride copolymer (having the effect of viscosity, dispersibility, and slow aggregation), the non-drying property, the drawn line drying property, and the prevention of separation in the pen core become highly compatible.
2) In addition, the ink is easily wetted on a non-absorbing surface, and can be stably written without letting the drawn line repelled (because the surface tension is lowered, the ink repellent on a non-absorbing surface is less, and the drawn line quality is improved) . Further, the drawn line is not blurred even when the cap is removed, resulting in excellent non-drying property. In this function, when the cap is removed, because the moisture in the ink contained in the pen core is volatilized and the ink is concentrated, the blending system of the ink collapses, and aggregation of the colorant and the like easily occurs. However, when the neutralized product of the isobutylene-maleic anhydride copolymer and a predetermined surfactant are contained in various amounts, the aggregation is alleviated, and thus the drawn line is less likely to blur.
3) Further, the vertical density difference is small, and the separation in the pen core is small. When the neutralized product of an isobutylene-maleic anhydride copolymer and a predetermined amount of a surfactant are contained, slow aggregation of the coloring material occurs. Thus, the separation of the coloring material in the pen core is small, and the difference between the upper and lower densities is alleviated. Further addition of hollow particles can be expected to further improve slow aggregation.
4) The drawn line drying property is excellent. In the present disclosure, because the wettability between the pigment surface and the solvent is improved, good dispersibility of the ink is obtained. Thus, the coating film tends to be uniform, and the drawn line drying property is improved.

In the present disclosure, because the functions and effects of 1) to 4) described above are exhibited, there can be provided an aqueous ink composition for a writing implement that is easily wetted on a non-absorbing surface, enables stable writing without repelling of a drawn line, prevents blurring of the drawn line even when a cap is removed, is excellent in non-drying property, has no difference in vertical density of a coloring material in a pen core, and is excellent in drawn line drying property.

### <Writing Implement>

A writing implement of the present disclosure is equipped with an aqueous ink composition for a writing implement having the properties described above. Thus, a writing implement that is easily wet on a non-absorbing surface, enables stable writing without repelling of the drawn line, does not cause the drawn line to be blurred even when the cap is removed, has excellent non-drying properties, has no difference in the upper and lower densities of the coloring material in the pen core, and has excellent drawn line drying properties, which is suitable for marking pens, marker pens, and the like, is obtained.

Examples of the writing device equipped with the aqueous ink composition include a marker pen and a marking pen provided with a pen tip such as a fiber tip, a felt tip, a plastic tip, a fiber core, or a porous core.

In the present disclosure, the "marking pen" means a pen having a mechanism for supplying ink stored in an ink storage portion to a writing portion made of a resin by capillarity and encompasses a pen referred to as "marker pen".

The structures of the marking pen (including pen core and pen tip) are not particularly limited, and the marker pen and the marking pen may be, for example, a direct liquid type pen provided with a collector structure (ink holding mechanism) in which a shaft cylinder works as an ink container and is filled with the aqueous ink composition for a writing implement having the configuration described above.

### Examples

Next, the present disclosure will be described in more detail using Examples and Comparative Examples, but the present disclosure is not limited to the following Examples.

### [Examples 1 to 8 and Comparative Examples 1 and 2]

Aqueous ink compositions for a writing implement were prepared by an ordinary method using the blending compositions listed in Table 1 below. The pH of each of the aqueous ink compositions for a writing implement at room temperature (25°C), when measured with a pH meter (available from HORIBA, Ltd.), was within the range of 7.9 to 8.2.

For each aqueous ink composition for a writing implement obtained above, a writing implement (aqueous marker pen) was prepared by the following methods, and the dry-out property, the drawn line drying property, the separation in the pen core, and the writing property on a non-absorbing surface (glass surface) were evaluated by the following evaluation methods.

The results are shown in Table 1 below.

### (Preparation of Marker Pen)

Marker pens were made using each of the ink compositions produced above. Specifically, each ink composition was charged into a marker pen [marker pen using a shaft of product name: PM-120T available from MITSUBISHI PENCIL CO., LTD., shaft material: recycled PP resin, pen core: (fine) PET fiber or (very fine) POM resin] to prepare a marker pen. The obtained marker pens of Examples 1 to 8 and Comparative Examples 1 to 2 were used to perform each evaluation.

### (Method for Evaluating Non-Drying Property)

The cap of the marker pen was removed, and the marker pen was allowed to stand still in an environment of 25°C and a humidity of 65% for 30 minutes. Thereafter, free hand writing (circling) was performed on PPC paper, and the non-drying property was evaluated for the degree of occurrence of "blurring" according to the following evaluation criteria.

Evaluation criteria:
A: The drawn line is favorable.
B: Blurring is observed in less than 1/4 of the drawn line.
C: Blurring is observed in 1/4 or more of the drawn line.

### (Method for Evaluating Drawn Line Drying Property)

Under an environment of 25°C and a humidity of 65%, straight writing (length: 25 cm) was performed on an object of a PET film, a paper and a weight of 500 g were placed on the writing line every predetermined time, and the time (seconds) when the transfer was stopped was measured. The shorter this time, the better the drawn line drying property. The evaluation was performed according to the following evaluation criteria.

Evaluation criteria:
A: within 10 seconds
B: more than 10 seconds and less than 30 seconds
C: 30 seconds or more

### (Method for Evaluating Separation in Pen Core)

Under an environment of 25°C and a humidity of 65%, a free hand writing (circling) performed on PPC paper and a free hand writing (circling) performed after the pen tip was left to stand upward for 2 weeks. The difference in "density" of the free hand writings was evaluated for the separation in the pen core according to the following evaluation criteria.

Evaluation criteria:
A: No difference in density is observed.
B: There is a difference in density in less than 1/4 of the drawn line.
C: There is a difference in density in 1/4 or more of the drawn line.

### (Method for Evaluating Writing Property on Non-Absorbing Surface (Glass))

The state of a drawn line when a circle is written by handwriting on a glass surface (normal plate glass of 15 × 30 × 1 cm) was visually observed. The writing properties were evaluated according to the following evaluation criteria.

### <Evaluation Criteria>

A: No repelling occurred, and writing line was good.
B: Ink repelling is observed in a part of the drawn line.
C: Ink repelling is observed in the entire drawn line.

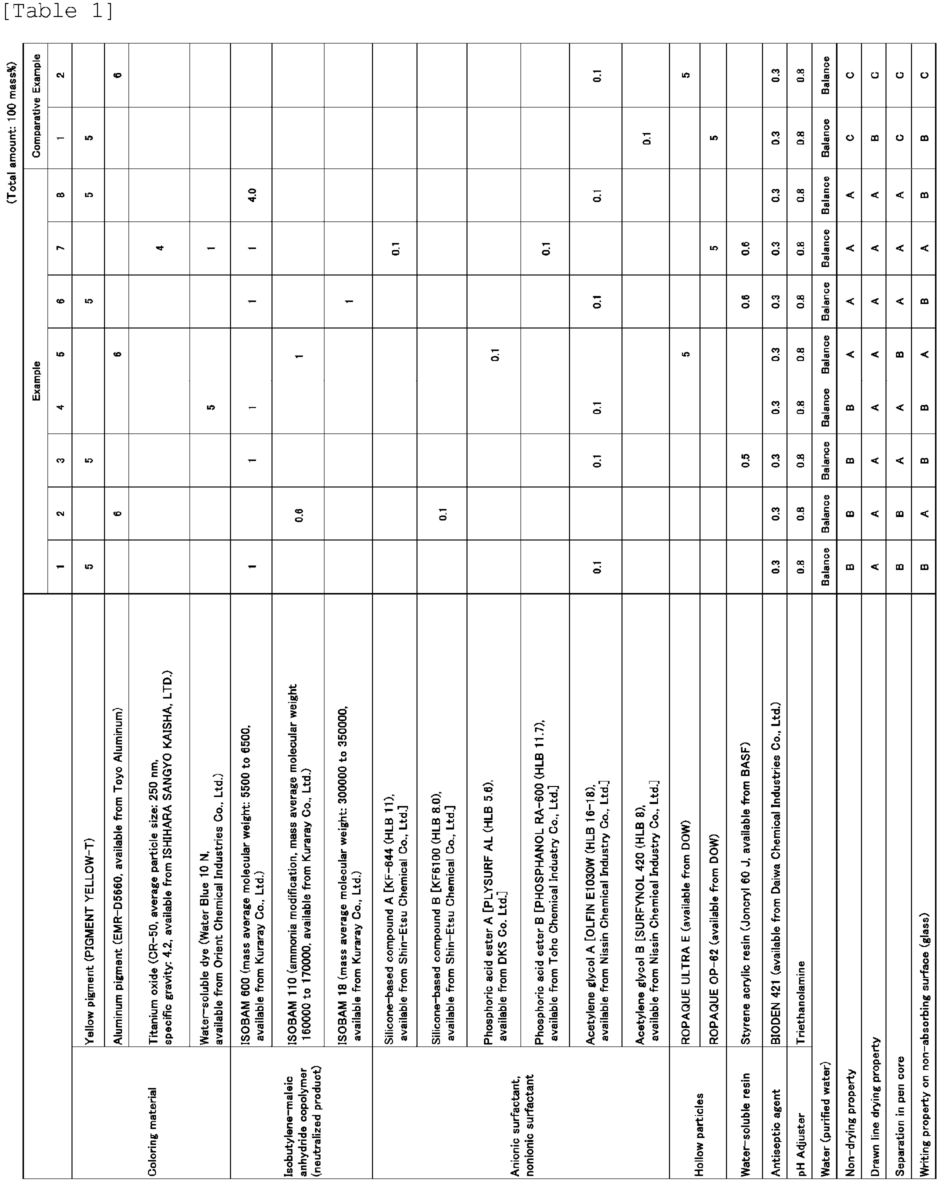

As is apparent from the results in Table 1 described above, it has been found that each aqueous ink composition for a writing implement of Examples 1 to 8 according to the present disclosure is excellent in dry-out property and drawn line drying property, without a separation of the coloring material in a pen core, and is also excellent in writing property on a non-absorbing surface (glass surface) as compared with the aqueous ink compositions for a writing implement of Comparative Examples 1 to 2 which fall outside the scope of the present disclosure. The composition is easily wetted on a non-absorbing surface, and drawn line is stable without being repelled. When a cap is removed, drawn line does not become blurred. It is excellent in non-dry-out property, has no difference in vertical density of the coloring material in the pen core, and is excellent in line drying property.

### Industrial Applicability

The aqueous ink composition for a writing implement can be suitably used for aqueous ink compositions for writing implements such as marking pens and marker pens.

## Claims

1. An aqueous ink composition for a writing implement, the aqueous ink composition comprising at least a coloring material, 0.01 to 10 mass% of a neutralized product of an isobutylene-maleic anhydride copolymer, 0.001 to 5 mass% of one or more surfactants selected from an anionic surfactant and a nonionic surfactant, and water.

2. The aqueous ink composition for a writing implement according to claim 1, wherein the surfactants have an HLB value of 4 to 12.

3. The aqueous ink composition for a writing implement according to claim 1 or 2, wherein the surfactants are selected from Group A described below:
Group A: acetylene glycols, phosphoric acid esters, and silicone surfactants.

4. The aqueous ink composition for a writing implement according to claim 1 or 2, wherein the aqueous ink composition further comprises hollow particles.

5. A writing implement comprising the aqueous ink composition for a writing implement described in claim 1 or 2.
